# EUROPEAN PATENT SPECIFICATION

(11) **EP 1 607 659 B1**
(45) Date of publication and mention of the grant of the patent: **18.06.2014**
(21) Application number: 05105318.9
(22) Date of filing: 16.06.2005
(51) Int. Cl.: F16H 59/06

(54) **Control lever with partially enclosed rotary wheel**
Schalthebel mit einem teilweise eingeschlossenem Rad
Levier de commande avec roue dans un espace semi-clos

(30) Priority: 17.06.2004 US 870246; 27.09.2004 US 951159
(43) Date of publication of application: 21.12.2005
(73) Proprietor: DEERE & COMPANY, Moline, Illinois 61265-8098 (US)
(72) Inventor: Easton, David J., Cedar Falls IA 50613 (US); Steele, Micah Y., Reinbeck IA 50669 (US)
(74) Representative: Holst, Sönke

(56) References cited:
- EP-A- 1 058 034
- EP-A- 1 273 990
- WO-A-03/040015
- JP-A- 2002 108 472
- US-A- 2 787 746
- US-A- 5 949 404
- US-B1- 6 404 187

## Description

The present invention relates to a control lever mechanism, such as a speed control lever for an infinitely variable transmission (IVT).

Production John Deere 20 Series tractors with an IVT include a speed control lever with a rotary wheel, and such a control lever assembly for an IVT is described in US 6,404,187. In this control lever assembly, the rotary wheel is mounted near the upper end of a lever housing. The wheel projects laterally from a side of the housing and is rotatable about a substantially horizontal axis which is transverse with respect to an axis of the lever. Most of the wheel is exposed and outside of the housing on which it is mounted. The housing must be large enough to allow an operator's hand to grip the housing in the area below the wheel and so that the operator's thumb can manipulate the wheel. But, such a large control lever assembly will be too large for use in more compact control modules, such as an armrest control console.

US 2, 787, 746 discloses a control lever assembly according to the preamble of claim 1. EP 1 273 990 A2 and JP 2002 108 472 disclose further control lever assemblies.

It is desired to have a knob/wheel design wherein only a portion of the wheel is exposed, thus, reducing the likelihood of an accidental manipulation of the wheel. It would also be desirable to use some existing production parts or components in the design, thus limiting the number of redesigned parts. It would also be desirable to have the wheel position sensor enclosed within a knob housing so as to avoid modifying other parts in order to locate the sensor elsewhere.

Accordingly, an object of this invention is to provide a compact control lever assembly, which especially can be used in an armrest control console and/or which especially reduces the likelihood of an accidental manipulation of the wheel.

Further objects of this invention could be to provide such a control lever assembly which utilizes existing production parts or components, thus limiting the number of redesigned parts and/or to provide such a control lever assembly wherein a wheel position sensor is enclosed within a knob housing so as to avoid modifying other parts in order to locate the sensor elsewhere.

These and other objects are achieved by the present invention, wherein a control lever assembly has a moveable lever and a knob mounted on an end of the lever. The knob has a hollow housing which is removably attached to a cylindrical base. The housing has a cylindrical side wall which forms an opening which extends into a top portion of the housing. A wheel is coupled to rotary encoder and both are enclosed in the housing. The wheel rotates about an axis which is essentially parallel to an axis of the lever. A portion of the side and the top of the wheel are exposed through the opening.

For a complete understanding of the objects, techniques, and structure of the invention reference should be made to the following detailed description and accompanying drawings, wherein:

Fig. 1 is a top view of a first embodiment of a lever assembly which is not claimed;

Fig. 2 is a partially sectional view taken along lines 2-2 of Fig. 1;

Fig. 3 is a partially sectional view taken along lines 3-3 of Fig. 1;

Fig. 4 is an enlarged side view of a knob portion of the lever assembly of Fig. 1;

Fig. 5 is a perspective view of a portion of a vehicle armrest control panel with a second embodiment of a lever knob assembly according to the present invention;

Fig. 6 is a perspective exploded view of the knob assembly of Fig. 5;

Fig. 7 is a perspective exploded view of the outer housing of Figs. 5 and 6; and

Fig. 8 is another perspective view of the lever knob assembly of Fig. 5.

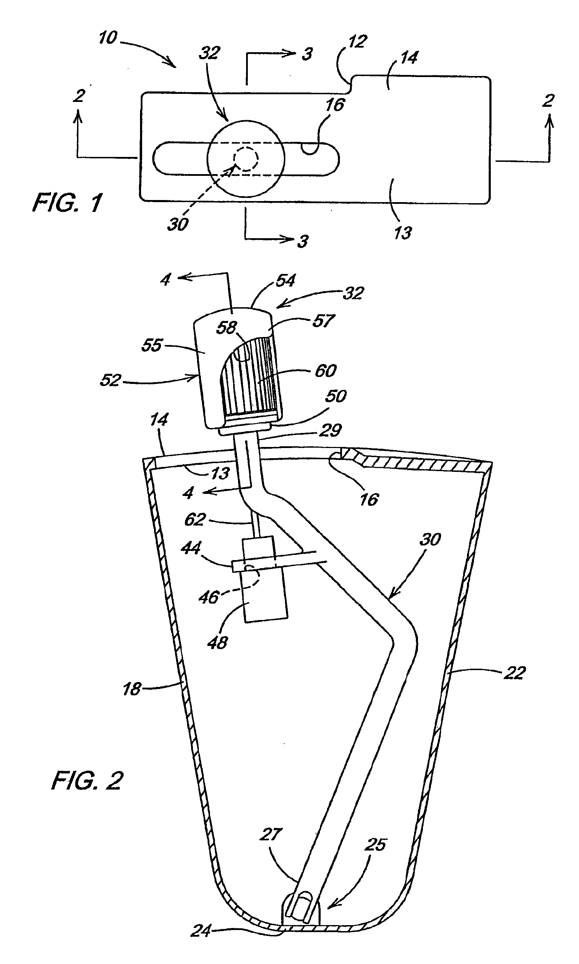

Referring to Fig. 1, 2 and 3, a speed lever assembly 10 includes a housing 12, such as forms part of an armrest (not shown) in a vehicle. The housing 12 includes a guide plate 13 with an upper surface 14 and in which is formed a conventional shift lever gate or slot 16. The housing includes front wall 18, side wall 20, rear wall 22 and base 24. A lever 30 has an inner end 27 pivotally coupled to the base 24 at pivot 25, and an outer end 29 which projects substantially radially away from pivot 25 and is slidably received in the slot 16. The ends 27 and 29 define a main axis of the lever 30 which extends radially away from pivot 25. A knob assembly 32 is mounted on the outer end of lever 30. The assembly 10 may be used as a control input for a transmission, such as an infinitely variable transmission.

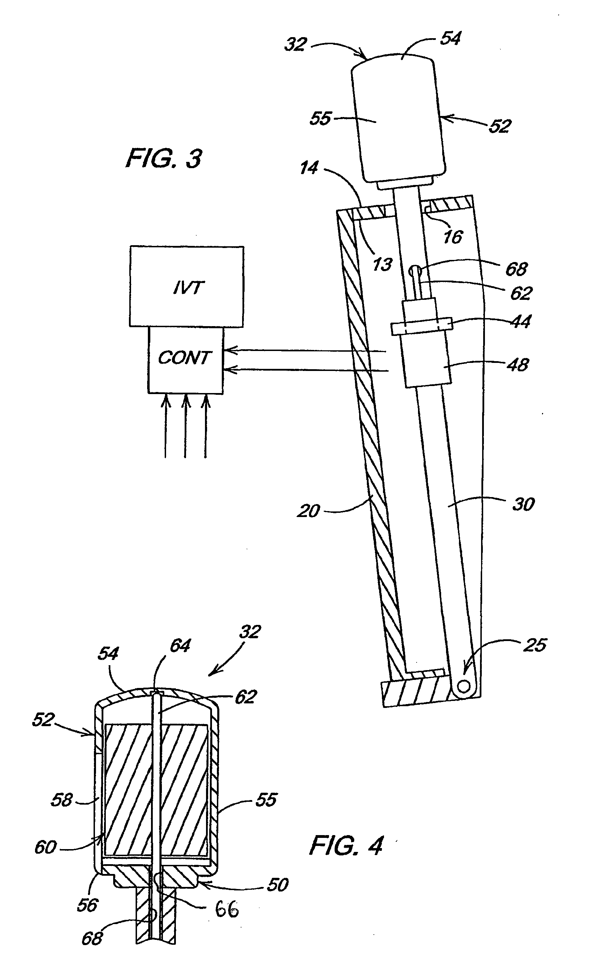

As best seen in Fig. 2 and 3, a support arm 44 projects from lever 30 substantially perpendicular to an axis of end 29. Arm 44 includes a bore 46 which receives a conventional rotary encoder 48, such as an optical encoder.

As best seen in Fig. 2, 3 and 4, knob assembly 32 includes a cylindrical base plate 50 which is fixed to an end of the lever 30. Assembly 32 also includes a generally cylindrical hollow outer housing 52 with a smoothly curved top surface 54 and cylindrical side wall 55. Housing 52 has an open end 56 which is removably attached to base 50, preferably in a snap fit manner. An opening 58 is formed in the housing 52 and extends less than 180 degrees in angular extent. As a result, more than half of the wheel 60 is enclosed by the housing 52.

A cylindrical rotary wheel 60 is received in and partially enclosed within the housing 52. Wheel 60 preferably has a knurled outer surface, is mounted for rotation in the housing 52 and is retained therein by the base 50 and the side wall 55. The inside diameter of the side wall 55 is slightly larger than the outer diameter of the wheel 60. Housing 52 forms a lip 57 which defines an end of the opening 58 and which covers an end of the wheel 60, so that the housing or side wall completely surrounds an outer surface of one end of the wheel 60. Wheel 60 rotates about an axis which is substantially parallel to an axis of the upper end of the lever 30.

The wheel 60 is preferably plastic and is molded onto a thin rigid wire or shaft or coupling member 62. The wire 62 extends though wheel 60 to a first end which is received by an alignment recess 64 formed in the center of an inner surface of the housing top 54. The wire 62 also extends through a central bore 66 in base 50 and through central bore 68 in lever 30 to a second end which is coupled to the rotary encoder 48. As a result, rotation of wheel 60 causes rotation of the sensing element (not shown) of encoder 48 so that encoder 48 will generate signals representing the position and rotation of wheel 60. These signals can be used as set speed signals in a transmission control system (not shown) in a known manner.

Thus, an operator can rest his or her hand on the top of the knob 32 or can grasp knob 32 with the fingers and move lever 30 within the slot 16 without actuation of wheel 60. Or, while the hand is on the top of knob 32, the operator can also manipulate and rotate wheel 60 with the thumb or one or more fingers through the opening 58. The operator need not place his hand on or below the housing side wall 52, and, as a result, the knob 32 can be positioned close to the upper surface 14 of the guide plate 13.

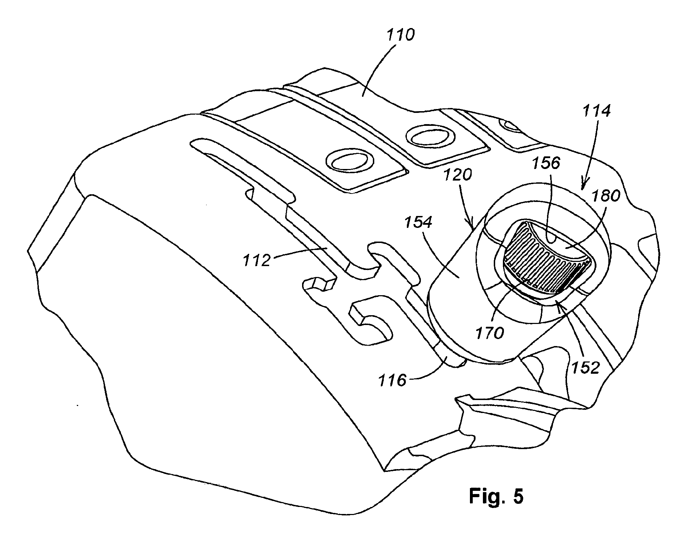

Referring to Fig. 5, an armrest control panel housing 110 includes a conventional guide slot 112 which receives a control lever unit 114, such as a control lever for an infinitely variable transmission (IVT) (not shown). Lever unit 114 has a shaft 116 which has a lower end (not shown) which is pivotally supported in a known manner with respect to the housing 110.

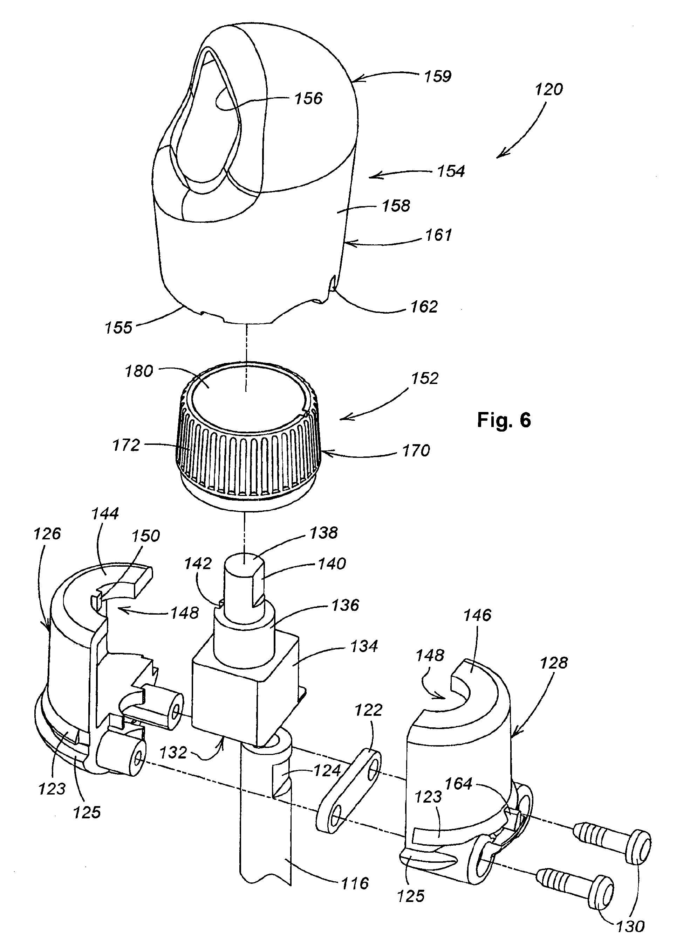

A knob assembly 120, according to the present invention is mounted to the upper end of the shaft 116. Referring now to Figs. 5 and 6, knob assembly 120 includes an alignment member 122 which is received in a slot 124 which extends across the shaft 116 near the upper end thereof. Assembly 120 also includes inner housing pieces 126 and 128 which are attached to each other, to member 122 and thus to shaft 116 by a pair of screws 130. Inner housing pieces 126, 128 enclose a conventional commercially available optical rotary position encoder 132. Pieces 126, 128 form an annular projection or rib 123 and a shoulder 125.

Encoder 132 has box-shaped case 134 and a cylindrical sleeve 136 from which extends a rotatable sensing shaft 138 with a flat surface 140. A key slot 142 is formed on one side of sleeve 136. The upper ends 144, 146 of the inner housing pieces 126, 128 form an opening 148 through which extends the shaft 138. A tab 150 projects from end 144 and is received by slot 142 to prevent the case 134 from rotating with respect to the housing pieces 126, 128.

A wheel assembly 152 is coupled to shaft 138 of encoder 132. Preferably, the wheel assembly 152 and the encoder 132 are the same as the wheel assembly and sensor/encoder of US 6,404,187, except that in the present invention the wheel 152 and encoder have their axes oriented parallel to a longitudinal axis of lever shaft 116. Wheel assembly 152 includes a generally cylindrical hollow wheel 170 with a knurled outer surface 172 and a slightly tapered outer profile. An end cap 180 is received in the upper end of wheel 170. The wheel 170 and end cap 180 form a top surface which faces away from the lever shaft 116.

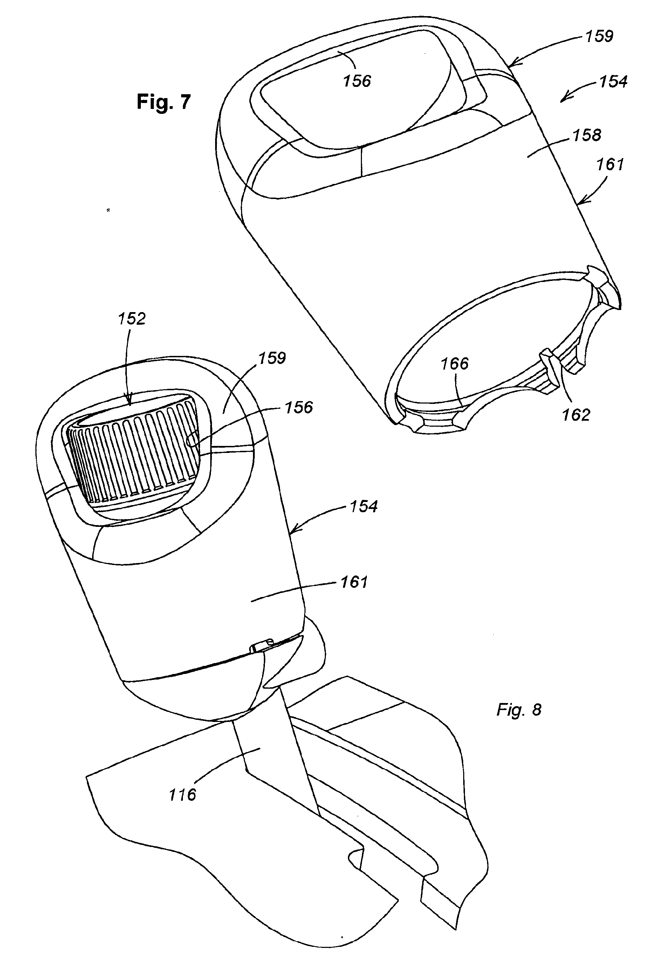

An outer housing 154 is mounted over the wheel assembly 152 and the inner housing pieces 126, 128. Housing 154 is hollow and is fully open at its lower end 155. An opening 156 is formed in the upper portion of housing 154, and extends into a sidewall 158 and a top wall of the outer housing 154. A slot 162 in the lower end 155 receives a tab 164 which projects from an outer portion of inner housing piece 128 to prevent relative rotation between outer housing 154 and inner housing pieces 126, 128. An annular groove 166 on the lower inner surface of sidewall 158 releasably receives rib 123 of the pieces 126, 128 in a snap-fit manner, and the lower end of side wall 158 engages shoulder 125 of pieces 126, 128. As best seen in Fig. 8, the housing 154 includes an upper portion 159 which contains the opening 156 and a lower portion 161 which extends from upper portion 159 to the lower end 155 of housing 154. Preferably, in the axial direction, the length of lower portion 161 is as least as long as or longer than upper portion 159. This provides ample space for an operator to grasp the lower portion 161 without inadvertently contacting the wheel 170. Yet, an operator can easily move a thumb or finger upwardly to manipulate wheel 170.

Referring again to Fig. 5, when assembled in the housing 154, a portion of the wheel assembly 152 is exposed and accessible through the opening 156. In particular, a portion of the top edge of wheel 170 and a portion of end cap 180 is exposed, and slightly less than half (in angular extent) of the outer side surface of wheel 170 is exposed.

Thus, with this design, an operator can rest his or her hand on the surface of the armrest 110 and grasp the portion of housing 154 below the opening 156 and move the lever unit 114 within the slot 112, which reduces the likelihood of an accidental manipulation of wheel 170. This design also uses some parts which are the same as previous production parts, thus limiting the number of redesigned parts. This design keeps the encoder within the outer knob housing and avoids modifying other parts in order to locate the encoder elsewhere.

While the present invention has been described in conjunction with a specific embodiment, it is understood that many alternatives, modifications and variations will be apparent to those skilled in the art in light of the foregoing description. Accordingly, this invention is intended to embrace all such alternatives, modifications and variations which fall within the scope of the appended claims.

## Claims

1. Control lever assembly having a lever (116) with an inner end pivotally mounted in a housing (110) and an outer end projecting away from the inner end , a knob assembly (120) mounted on the outer end of the lever (116), the knob assembly (120) including a hollow knob housing (154) having a side wall (158) and a top wall being joined to and enclosing one end of the side wall (158), wherein an opening (156) is formed in an upper portion (159) of the knob housing (154), the opening (156) extending part way into the side wall (158) and the top wall, and a wheel (170) rotatably mounted to the knob assembly (120) and being accessible to an operator through the opening (156), wherein the wheel (170) is received in the knob housing (154) for rotation therein about a rotation axis which is preferably substantially parallel to an axis which extends between the ends of the lever (116) causing rotation of a rotary encoder (132) which is coupled to the wheel (170), wherein a portion of a top edge of the wheel (170) and a portion of an end cap (180) of the wheel (170) are exposed and accessible through the opening (156), **characterized in that** the wheel (170) has a slightly tapered outer profile, wherein the knob assembly (120) includes an alignment member (122) which is received in a slot (124) extending across the lever (116) near the outer end thereof, and inner housing pieces (126, 128) enclosing a portion of the rotary encoder (132) and being attached to each other, to the alignment member (122) and thus to the lever (116) by a pair of screws (130), the knob housing (154) being mounted over the wheel (170) and the inner housing pieces (126, 128).

2. The control lever assembly according to claim 1, **characterized in that** the knob housing (154) includes a lower portion (161) which extends from the upper portion (159) to a lower end (155) of the knob housing (154), and in an axial direction, the lower portion (161) is longer than the upper portion (159).

3. The control lever assembly according to claim 1, **characterized in that** the knob housing (154) is releasably attached to the inner housing pieces (126, 128) preferably in a snap-fit manner.

## Patentansprüche

1. Steuerhebelanordnung, die einen Hebel (116) mit einem inneren Ende, das schwenkbar in einem Gehäuse (110) angebracht ist, und mit einem äußeren Ende, das aus dem inneren Ende hervorsteht, und eine Knopfanordnung (120), die an dem äußeren Ende des Hebels (116) angebracht ist, aufweist,
wobei die Knopfanordnung (120) ein hohles Knopfgehäuse (154) mit einer Seitenwand (158) und einer oberen Wand aufweist, die mit einem Ende der Seitenwand (158) verbunden ist und diese einschließt,
wobei eine Öffnung (156) in einem oberen Abschnitt (159) des Knopfgehäuses (154) ausgebildet ist, wobei sich die Öffnung (156) teilweise weg von der Seitenwand (158) und der oberen Wand erstreckt, und wobei ein Rad (170) drehbar an der Knopfanordnung (120) angebracht ist und von einem Bediener durch die Öffnung (156) zugänglich ist,
wobei das Rad (170) in dem Knopfgehäuse (154) zum Drehen darin um eine Drehachse aufgenommen ist, die vorzugsweise im Wesentlichen parallel zu einer Achse verläuft, die sich zwischen den Enden des Hebels (116) erstreckt und die Drehung des Drehgebers (132) bewirkt, der mit dem Rad (170) gekoppelt ist, wobei ein Abschnitt des oberen Rands des Rads (170) und ein Abschnitt einer Endkappe (180) des Rads (170) durch die Öffnung (156) offengelegt und zugänglich sind,
**dadurch gekennzeichnet, dass**
das Rad (170) ein leicht verjüngtes äußeres Profil aufweist, wobei die Knopfanordnung (120) ein Ausrichtungselement (122) aufweist, das in einem Schlitz (124) aufgenommen ist, der sich über den Hebel (116) angrenzend an dem äußeren Ende davon erstreckt, und wobei innere Gehäuseteile (126, 128) einen Abschnitt des Drehgebers (132) einschließen und aneinander, an dem Ausrichtungselement (122) und somit an dem Hebel (116) über ein Paar Schrauben (130) befestigt sind, wobei das Knopfgehäuse (154) über dem Rad (170) und den inneren Gehäuseteilen (126, 128) angebracht ist.

2. Steuerhebelanordnung nach Anspruch 1, **dadurch gekennzeichnet, dass** das Knopfgehäuse (154) einen unteren Abschnitt (161) aufweist, der sich von dem oberen Abschnitt (159) zu einem unteren Ende (155) des Knopfgehäuses (154) und in eine axiale Richtung erstreckt, wobei der untere Abschnitt (161) länger als der obere Abschnitt (159) ist.

3. Steuerhebelanordnung nach Anspruch 1, **dadurch gekennzeichnet, dass** das Knopfgehäuse (154) lösbar an den inneren Gehäuseteilen (126, 128) vorzugsweise durch Einrasten befestigt ist.

## Revendications

1. Ensemble de levier de commande comprenant un levier (116) avec une extrémité interne montée de manière pivotante dans un boîtier (110) et une extrémité externe faisant saillie à l'écart de l'extrémité interne, un ensemble de bouton (120) monté sur l'extrémité externe du levier (116), l'ensemble de bouton (120) comportant un boîtier creux pour bouton (154) ayant une paroi latérale (158) et une paroi supérieure reliée à, et renfermant, une extrémité de la paroi latérale (158), une ouverture (156) étant formée dans une partie supérieure (159) du boîtier pour bouton (154), l'ouverture (156) s'étendant en partie à l'intérieur de la paroi latérale (158) et de la paroi supérieure, et une roue (170) montée à rotation sur l'ensemble de bouton (120) et étant accessible à un opérateur à travers l'ouverture (156), la roue (170) étant reçue dans le boîtier pour bouton (154) de manière à tourner à l'intérieur de celui-ci autour d'un axe de rotation qui est de préférence substantiellement parallèle à un axe qui s'étend entre les extrémités du levier (116), en provoquant la rotation d'un codeur rotatif (132) qui est accouplé à la roue (170), une partie d'un bord supérieur de la roue (170) et une partie d'un capuchon d'extrémité (180) de la roue (170) étant exposées et accessibles à travers l'ouverture (156), **caractérisé en ce que** la roue (170) a un profil externe légèrement conique, l'ensemble de bouton (120) comportant un organe d'alignement (122) qui est reçu dans une fente (124) s'étendant en travers du levier (116) à proximité de son extrémité externe, et des éléments de boîtier internes (126, 128) renfermant une partie du codeur rotatif (132) et étant fixés les uns aux autres, à l'organe d'alignement (122) et de ce fait au levier (116) par une paire de vis (130), le boîtier pour bouton (154) étant monté par-dessus la roue (170) et par-dessus les éléments de boîtier internes (126, 128).

2. Ensemble de levier de commande selon la revendication 1, **caractérisé en ce que** le boîtier pour bouton (154) comporte une partie inférieure (161) qui s'étend depuis la partie supérieure (159) jusqu'à une extrémité inférieure (155) du boîtier pour bouton (154), et dans une direction axiale, la partie inférieure (161) est plus longue que la partie supérieure (159).

3. Ensemble de levier de commande selon la revendication 1, **caractérisé en ce que** le boîtier pour bouton (154) est attaché de manière détachable aux éléments de boîtier internes (126, 128), de préférence par encliquetage.
